# EUROPÄISCHE PATENTANMELDUNG

(11) **EP 1 762 536 A2**
(43) Veröffentlichungstag der Anmeldung: **14.03.2007**
(21) Anmeldenummer: 06018561.8
(22) Anmeldetag: 05.09.2006
(51) Int. Cl.: B66F 9/075, F15B 1/26

(54) **Mobile Arbeitsmaschine mit einem druckbeaufschlagten Tank**

(30) Priorität: 09.09.2005 DE 102005042939
(71) Anmelder: STILL GMBH, D-22113 Hamburg (DE)
(72) Erfinder: Kubusch, Dietmar, 21244 Buchholz (DE)
(74) Vertreter: Lang, Michael

(57) **Zusammenfassung**

Die Erfindung betrifft eine mobile Arbeitsmaschine, insbesondere Gegengewichtsgabelstapler, mit mindestens einem druckbeaufschlagten Tank, insbesondere zum Mitführen von bei Normalbedingungen gasförmigem Brennstoff. Der Tank weist in mindestens einer Querschnittsebene eine annähernd rechteckige Außenkontur auf.

## Beschreibung

Die Erfindung betrifft eine mobile Arbeitsmaschine, insbesondere Gegengewichtsgabelstapler, mit mindestens einem druckbeaufschlagten Tank, insbesondere zum Mitführen von bei Normalbedingungen gasförmigem Brennstoff. Die Erfindung betrifft ebenso einen druckbeaufschlagten Tank für ein Flurförderzeug.

Mobile Arbeitsmaschinen werden häufig mit Brennstoffen, die unter Normalbedingungen gasförmig sind, betrieben. Neben Brennstoffen auf Kohlenwasserstoffbasis wie Propan, Butan oder Erdgas kommt dabei zunehmend auch Wasserstoff zum Einsatz, der beispielsweise zum Betrieb einer Brennstoffzelleneinheit verwendet wird. Zur Bevorratung dieser Brennstoffe verfügt die mobile Arbeitsmaschine zumeist über einen oder mehrere druckbeaufschlagte Tanks. Um eine möglichst große Menge des Brennstoffs speichern zu können, sind die Tanks zumeist mit relativ hohen Drücken, üblicherweise mehr als 25 bar und typischerweise in der Größenordnung von 200 bar, bei Wasserstoff sogar von 350 bar und in Einzelfällen von 700 bar beaufschlagt.

Bei mobilen Anwendungen wird im Allgemeinen angestrebt, Komponenten so leicht wie möglich zu gestalten, um beispielsweise die Nutzlast eines Fahrzeugs zu erhöhen. Bei Brennstofftanks nach dem Stand der Technik wird demzufolge versucht, diese möglichst leicht und dennoch stabil zu gestalten, weshalb beispielsweise Aluminiumlegierungen oder Verbundwerkstoffe Verwendung finden. Weiterhin sind Tanks nach dem Stand der Technik, um bei minimalem Materialeinsatz maximale Fülldrucke, also auch maximale Füllmengen zu erzielen, zumeist zylindrisch oder kugelförmig mit annähernd gleichförmiger Wandstärke ausgeführt. Derartige Tanks besitzen jedoch eine schlechte Raumausnutzung, insbesondere, wenn zwei oder mehr davon nebeneinander angeordnet sind, da zwischen den Tanks beziehungsweise zwischen Tanks und einer zumeist gerade ausgeführten Gehäusewand ungenutzter Raum verbleibt. Eine Anordnung außerhalb des Fahrzeuggrundkörpers, wie bei mit Flüssiggas betriebenen Fahrzeugen häufig angewandt, vermeidet dies, hat jedoch den Nachteil, dass der Tank Umwelteinflüssen, insbesondere mechanischer Beschädigung oder Sonneneinstrahlung ungeschützt ausgesetzt ist und zudem die Zugänglichkeit des Fahrzeugs oder die Sicht der Bedienperson einschränkt. Die Anbringung weiterer Komponenten im Bereich von Tanks nach dem Stand der Technik ist aufgrund der runden Geometrie ebenfalls erschwert und erfordert oft aufwändige Zusatzhalterungen, die an umgebenden Rahmen- oder Gehäusebauteilen angebracht sind.

Der Erfindung liegt daher die Aufgabe zugrunde, eine mobile Arbeitsmaschine, insbesondere Gegengewichtsgabelstapler, mit mindestens einem druckbeaufschlagten Tank, insbesondere zum Mitführen von bei Normalbedingungen gasförmigem Brennstoff zu schaffen, die über eine hohe Betriebssicherheit und Einsatzdauer verfügt, bei optimaler Raumausnutzung einfach aufgebaut ist und einen besonders wirtschaftlichen Betrieb ermöglicht.

Der Erfindung liegt ebenso die Aufgabe zugrunde, einen druckbeaufschlagten Tank für eine mobile Arbeitsmaschine zu schaffen, die über eine hohe Betriebssicherheit und Einsatzdauer verfügt, einfach aufgebaut ist und einen besonders wirtschaftlichen Betrieb ermöglicht.

Diese Aufgabe wird hinsichtlich der mobilen Arbeitsmaschine dadurch gelöst, dass der Tank in mindestens einer Querschnittsebene eine zumindest annähernd rechteckige Außenkontur aufweist. Die Außenkontur ist dabei insbesondere frei von größeren Einbuchtungen, Auswölbungen oder Vorsprüngen, wie sie beispielsweise bei einer angenäherten Kissenform oder durch aufwändige Anbringung von Standfüßen oder - ringen gegeben sind. Dadurch kann der Tank besonders raumsparend an einer zumeist ebenfalls annähernd eben ausgeformten Gehäusewand und/oder Rahmenträger des Flurförderzeugs angeordnet werden. Insbesondere kann der Tank gut in Ecken des Gehäuses und/oder Rahmens angeordnet werden, da er diese optimal ausfüllt. Die Befestigung wird ebenfalls erleichtert, da eine gleichmäßige Auflage des Tanks auf Gehäuse- und/oder Rahmenteilen erreicht wird.

Es ist besonders vorteilhaft, wenn der druckbeaufschlagte Tank in drei zueinander annähernd senkrecht stehenden Querschnittsebenen eine annähernd rechteckige Außenkontur aufweist. Damit hat der Tank annähernd quaderförmige Form und kann besonders gut in zumeist ebenso ausgeformte Leerräume des Flurförderzeugs eingepasst werden. Insbesondere bei Flurförderzeugen, bei denen eine herkömmliche Batterie durch eine Energieversorgungseinheit mit Brennstoffzellen und Brennstofftank ersetzt wird, besitzt die Energieversorgungseinheit eine annähernd identische Außenkontur wie der quaderförmige Batterietrog. In einer derartigen Energieversorgungseinheit ist ein quaderförmiger Tank besonders raumeffizient verbaubar. Auch die Anordnung von weiteren Komponenten in der Umgebung des Tanks wird erleichtert, da am Tank auf allen Seiten ebene Auflage- und Anlageflächen gegeben sind.

Es ist von besonderem Vorteil, wenn mindestens ein Druckraum des druckbeaufschlagten Tanks in mindestens einer Querschnittsebene einen annähernd kreisförmigen Querschnitt aufweist. Kreisförmige Querschnitte sind einfach zu fertigen und für den Druckraum besonders gut geeignet, da hierbei das Auftreten von schädlichen Spannungsspitzen bei Beaufschlagung mit hohen Drücken vermieden wird. Außerdem lassen sich dadurch definierte höchste oder tiefste Entnahmepunkte für den Inhalt einfach realisieren.

Indem der Druckraum des druckbeaufschlagten Tanks mit einer Beschichtung versehen ist, kann die Dichtigkeit verbessert werden und der Tank selbst vor Schädigungen, beispielsweise durch Korrosion, geschützt werden.

Vorteilhafterweise ist der druckbeaufschlagte Tank aus einem Eisenwerkstoff, insbesondere Stahl, gebildet. Eisenwerkstoffe sind kostengünstig verfügbar und gut zu bearbeiten. Die Eigenschaften können durch Legierungszusammensetzung und Wärmebehandlung gut an die Besonderheiten des jeweiligen Einsatzes angepasst werden. Durch Gießen und/oder Schmieden ist endformnahes Urformen mit geringem Aufwand möglich. Stähle bieten insbesondere die für den gewählten Einsatzzweck nötige Zähigkeit. Eisenwerkstoffe besitzen auch eine relativ hohe Dichte, so dass der Tank relativ schwer wird. Insbesondere bei einem kreisförmigen Querschnitt des Druckraums und rechteckigem Querschnitt der Außenkontur ist in den Eckbereichen, die bei Tanks mit kreisförmiger Außenkontur ungefüllt bleiben, der Eisenwerkstoff des Tanks vorhanden, so dass der Tank gegenüber einem herkömmlichen Tank gleichen Inhalts und ähnlichen effektiven Platzbedarfs ein wesentlich höheres Gewicht aufweist, was bei mobilen Arbeitsmaschinen bisweilen erhebliche Vorteile hat.

Es ist zweckmäßig, wenn der druckbeaufschlagte Tank einen Grundkörper und mindestens ein Verschlusselement aufweist. Indem der Tank aus mindestens zwei Teilen aufgebaut ist, wird die Fertigung erleichtert. Bei einheitlichem Grundkörper kann durch Verwendung unterschiedlicher Verschlusselemente eine Anpassung an die Einsatzbedingungen, insbesondere den verwendeten Brennstoff oder die Einbaulage, vorgenommen werden.

Es ist besonders zweckmäßig, wenn das Verschlusselement mindestens eine Armatur und/oder mindestens eine Anschlussvorrichtung für mindestens eine Armatur und/oder eine Rohrleitung umfasst. Dadurch wird der Montageaufwand reduziert, da die Anschlussvorrichtung beziehungsweise die Armatur zusammen mit dem Verschlusselement montiert werden können. Bei unterschiedlichen Anschlussverhältnissen kann bei gleichem Grundkörper des Tanks durch ein anderes Verschlusselement eine Anpassung an eine andere Anschlusssituation vorgenommen werden.

In einer weiteren Ausgestaltung der Erfindung ist es vorteilhaft, wenn der Grundkörper des druckbeaufschlagten Tanks mindestens eine Anschlussvorrichtung für mindestens eine Armatur und/oder mindestens eine Rohrleitung umfasst. Dadurch sind auf einfache Weise Vorrichtungen zur Befüllung und/oder Entleerung des Tanks anschließbar.

In einer vorteilhaften Weiterbildung der Erfindung weist der druckbeaufschlagte Tank mindestens zwei getrennt angeordnete Druckräume auf. Dadurch können verschiedene Gase in dem Tank bevorratet werden. Die Druckräume können auch mit unterschiedlichem Druck beaufschlagt sein.

Es ist von besonderem Vorteil, wenn der druckbeaufschlagte Tank Vorrichtungen zur Befestigung des druckbeaufschlagten Tanks insbesondere am Fahrzeug und/oder an weiteren Tanks aufweist. Dadurch wird der Montageaufwand reduziert und es können Befestigungsvorrichtungen am Rahmen oder an Gehäuseteilen des Flurförderzeugs entfallen.

In einer vorteilhaften Ausgestaltung der Erfindung ist der druckbeaufschlagte Tank zur Bevorratung von Wasserstoff vorgesehen. Wasserstoff besitzt insbesondere bei Flurförderzeugen als Energieträger eine Reihe von Vorteilen, insbesondere das Fehlen schädlicher Emissionen.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: einen druckbeaufschlagten Tank einer erfindungsgemäßen mobilen Arbeitsmaschine,
- Figur 2: einen druckbeaufschlagten Tank mit zwei Druckräumen für eine erfindungsgemäße mobile Arbeitsmaschine,
- Figur 3: einen Gegengewichtgabelstapler mit einem Brennstoffzellensystem und einem druckbeaufschlagten Wasserstofftank nach dem Stand der Technik.

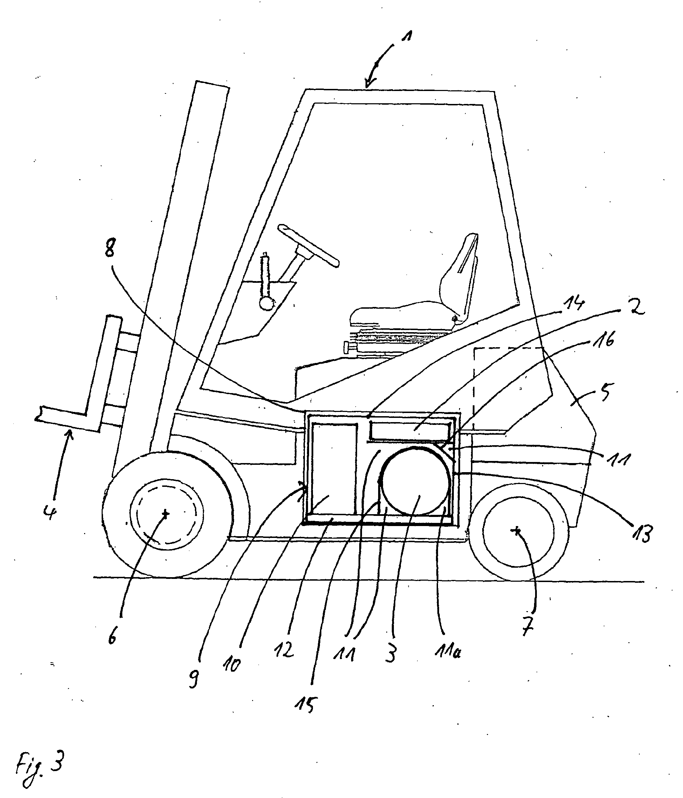

In Figur 3 ist ein Gegengewichtsgabelstapler 1 mit einer Brennstoffzelleneinheit 2 und einem Wasserstofftank 3 als Beispiel für eine mobile Arbeitsmaschine nach dem Stand der Technik gezeigt. Lasten werden auf einem hier nicht vollständig dargestellten Lastaufnahmemittel 4 aufgenommen und transportiert. Zum Ausgleich für das Gewicht der Last ist im Heckbereich des Gabelstaplers 1 ein Gegengewicht 5 angeordnet. Zwischen der Vorderachse 6 und der Hinterachse 7 des Gabelstaplers 1 ist ein Batteriefach 8 angeordnet, in das eine hier nicht dargestellte Bleibatterie oder eine Energieversorgungseinheit 9 eingesetzt werden kann. Die Energieversorgungseinheit 9 umfasst im Wesentlichen eine Brennstoffzelleneinheit 2, einen Wasserstofftank 3 sowie weitere, hier nicht im Detail dargestellte Hilfsaggregate 10. Der Wasserstofftank 3 besitzt eine für derartige Anwendungen nach dem Stand der Technik übliche zylindrische Grundform und ist bei mobilen Anwendungen vorzugsweise aus einem relativ leichten Material, wie beispielsweise einer Aluminiumlegierung oder einem faserverstärkten Verbundwerkstoff gefertigt. Durch die zylindrische Grundform des Tanks 3 sind weite Bereiche 11, 11a der Energieversorgungseinheit 9, insbesondere zwischen dem Tank 3 und einer Bodenplatte 12 sowie einer Wand 13 eines Gehäuses 14 der Energieversorgungseinheit 9 nicht ausgefüllt. Der Tank 3 ist mittels Haltebändern 15 an der Bodenplatte 12 der Energieversorgungseinheit 9 befestigt. Die Brennstoffzelleneinheit 2 wird von einer Haltevorrichtung 16 getragen, die an der Wand 13 des Gehäuses 14 der Energieversorgungseinheit 9 befestigt ist. Wird die Energieversorgungseinheit 9 anstelle eines herkömmlichen Batterietrogs verwendet, reduziert sich die Nutzlast des Fahrzeugs 1 gegenüber der Verwendung einer Bleibatterie, da diese wesentlich schwerer ist als die Energieversorgungseinheit 9.

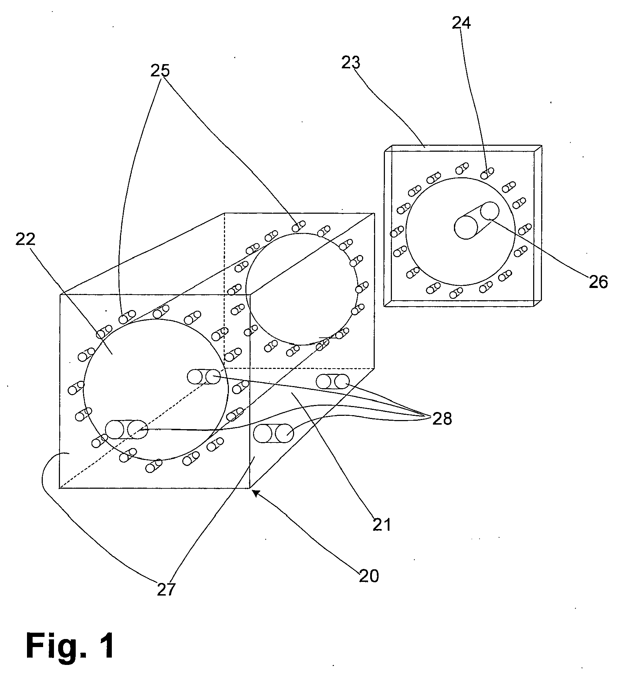

Figur 1 zeigt schematisch einen erfindungsgemäßen druckbeaufschlagten Tank 20 für ein Flurförderzeug 1. Der aus Stahl gefertigte Tank 20 besteht aus einem Grundkörper 21, der eine annähernd quaderförmige Außenkontur besitzt und einen zylindrischen Druckraum 22 aufweist, sowie zwei Verschlusselementen 23, von denen der Einfachheit halber nur eines gezeigt ist. Das Verschlusselement 23 wird mit dem Grundkörper 21 verschraubt, wozu geeignete Bohrungen 24 im Verschlusselement 23 sowie Gewindebohrungen 25 im Grundkörper 21 und ein hier nicht dargestelltes Dichtungssystem vorgesehen sind. Es sind jedoch auch andere Befestigungsmöglichkeiten nach dem Stand der Technik, wie beispielsweise Verschweißen oder Aufbringen eines Gewindes auf den Außendurchmesser eines zylindrischen Verschlusselements 23 und eines entsprechenden Gegengewindes an der Stirnseite des Druckraums 22 denkbar. Am Verschlusselement 23 ist bereits ein Rohrstück 26 angeformt, an das eine Befüll- und/oder Entnahmeleitung angeschlossen werden kann.

Durch die quaderförmige Grundform kann der Tank 20 beispielsweise genau in die Ecke 11a der Energieversorgungseinheit 9 eingepasst werden. Die Hohlräume 11 sind dadurch ausgefüllt und das Gewicht der Energieversorgungseinheit 9 und damit des Gabelstaplers 1 wird deutlich erhöht. Dadurch verbessert sich sowohl die Traktionsleistung des Fahrzeugs 1, wenn es zum Schleppen verwendet wird, als auch die Nutzlast, da die Standsicherheit durch den weit von der als Drehpunkt wirkenden Vorderachse 6 angeordneten, relativ schweren Tank 20 günstig beeinflusst wird. In den Seitenwänden 27 des Grundkörpers 21 sind mit Gewinde versehene Bohrungen 28 angeordnet, mittels derer der Tank 20 an Wand 13 und Bodenplatte 12 des Gehäuses 14 der Energieversorgungseinheit 9 befestigt werden kann. Weiterhin können die Bohrungen 28 zur Befestigung weiterer Komponenten genutzt werden, so dass beispielsweise die Haltevorrichtung 16 für die Brennstoffzelleneinheit 2 entfallen kann.

Aufgrund der quaderförmigen Form können auch mehrere derartige Tanks 20 nebeneinander oder übereinander angeordnet werden. Für diesen Fall ist es auch denkbar, den Grundkörper 21 in seiner Längsrichtung beispielsweise mit Schwalbenschwanzführungen zu versehen, um die Tanks 20 aneinander oder an einen Rahmen und/oder Gehäuse einer mobilen Arbeitsmaschine oder einer Energieversorgungseinheit 9 zu koppeln. Bei einer derartigen Bauweise ist es möglich, durch Aneinanderreihen mehrerer Tanks 20 auch größere Gasmengen zu speichern und dadurch mit nur einer Grundform des Tanks 20 beziehungsweise der Grundkörpers 21 verschiedene Typen von mobilen Arbeitsmaschinen mit unterschiedlich hohem Brennstoffbedarf auszurüsten.

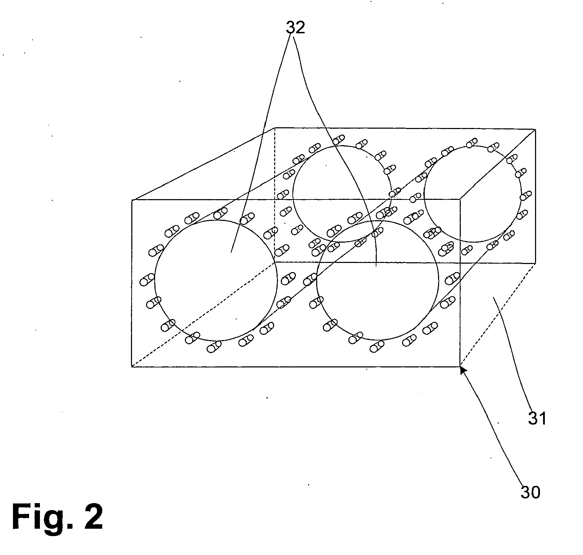

Figur 2 zeigt eine weitere Ausführungsform der Erfindung, bei der in einem Tank 30 mit quaderförmigern Grundkörper 31 zwei getrennte zylindrische Druckräume 32 angeordnet sind. Dadurch ist es möglich, in einem Tank 30 beispielsweise verschiedene Gase, wie Wasserstoff und Stickstoff, zu lagern oder aber ein Gas bei unterschiedlichen Drücken. Ein derartiger Tank 30 kann aber auch anstelle zweier einzelner Tanks 20 mit jeweils halbem Volumen eingesetzt werden, was eine Verbindung zwischen den beiden Druckräumen 32 sinnvoll macht. Dies kann beispielsweise über Verbindungskanäle im Grundkörper 31 erfolgen, es sind aber auch externe Rohrleitungen denkbar, die beispielsweise an Verschlusselementen 23, wie sie in Figur 1 gezeigt sind, angeschlossen sein können.

Selbstverständlich sind auch andere Ausführungsformen der Erfindung denkbar. So entfaltet die Erfindung ihre Vorteil nicht nur bei Gegengewichtsgabelstaplern, sondern bei allen mobilen Arbeitsmaschinen, bei denen der Einbauraum beschränkt und häufig ein gewisses Mindestgewicht oder eine gewisse Gewichtsverteilung zu beachten ist, also beispielsweise auch bei anderen Flurförderzeugen, insbesondere bei Industrieschleppern, deren Traktionsleistung unmittelbar mit dem Gewicht zusammenhängt. Auch ein Einsatz bei Baggem oder beweglichen Arbeitsbühnen, bei denen Gegengewichte zum Einsatz kommen, um im Betrieb auftretende Lasten auszugleichen, ist mit Vorteilen verbunden.

Selbstverständlich ist auch die Speicherung von anderen Gasen und Gasgemischen als Wasserstoff denkbar, auch von solchen, die unter erhöhtem Druck bei Raumtemperatur in flüssigem Zustand vorliegen. Der Querschnitt des Druckraums 22, 32 kann selbstverständlich auch eine andere als die gezeigte Form besitzen, beispielsweise bei hinreichender Wandstärke auch annähernd quaderförmig wie die Außenkontur des Tanks 20, 30. Ebenso können im Grundkörper 21, 31 des Tanks 20, 30 Öffnungen vorgesehen werden, beispielsweise zum Anschluss von Rohrleitungen und/oder Armaturen sowie zur Durchführung von Sensorkabeln. Die Fertigung des Grundkörpers 21, 31, kann, auch in Abhängigkeit vom verwendeten Werkstoff, auf unterschiedliche Weise erfolgen. Als Werkstoffe eignen sich besonders solche, die hohe Festigkeiten und hohes Gewicht besitzen sowie einfach zu fertigen und zu verarbeiten sind, insbesondere also Stähle, wobei insbesondere im Hinblick auf Korrosionsfestigkeit entweder ein entsprechend der Betriebbedingungen eine hinreichend korrosionsbeständige Legierung zu wählen oder aber der Druckraum 22, 32 mit einer Beschichtung zu versehen ist. Als Fertigungsverfahren für den Grundkörper 21, 31 kommen ebenfalls verschiedene Methoden in Frage, wobei bevorzugt solche zu wählen sind, die es erlauben, das gewünschte Profil als "Meterware", also in annähernd beliebiger Länge zur Verfügung zu stellen, wie beispielsweise Strangpressen, Fließpressen, Walzen. In diesem Fall kann durch Ablängen des Rohprofils auf einfache Weise ein Grundkörper 21, 31 in der gewünschten Länge hergestellt werden. Aber auch gegossene Grundkörper 21, 31 sind denkbar.

## Patentansprüche

1. Mobile Arbeitsmaschine, insbesondere Gegengewichtsgabelstapler (1), mit mindestens einem druckbeaufschlagten Tank (20, 30), insbesondere zum Mitführen von bei Normalbedingungen gasförmigem Brennstoff, **dadurch gekennzeichnet, dass** der Tank (20, 30) in mindestens einer Querschnittsebene eine zumindest annähernd rechteckige Außenkontur aufweist.

2. Mobile Arbeitsmaschine nach Anspruch 1, **dadurch gekennzeichnet, dass** der druckbeaufschlagte Tank (20, 30) in drei zueinander annähernd senkrecht stehenden Querschnittsebenen eine annähernd rechteckige Außenkontur aufweist.

3. Mobile Arbeitsmaschine nach Anspruch 1 oder 2, **dadurch gekennzeichnet, dass** mindestens ein Druckraum (22, 32) des druckbeaufschlagten Tanks (20, 30) in mindestens einer Querschnittsebene einen annähernd kreisförmigen Querschnitt aufweist.

4. Mobile Arbeitsmaschine nach einem der Ansprüche 1 bis 3, **dadurch gekennzeichnet, dass** der Druckraum (22, 32) des druckbeaufschlagten Tanks (20, 30) mit einer Beschichtung versehen ist.

5. Mobile Arbeitsmaschine nach einem der Ansprüche 1 bis 4, **dadurch gekennzeichnet, dass** der druckbeaufschlagte Tank (20, 30) aus einem Eisenwerkstoff, insbesondere Stahl, gebildet ist.

6. Mobile Arbeitsmaschine nach einem der Ansprüche 1 bis 5, **dadurch gekennzeichnet, dass** der druckbeaufschlagte Tank (20, 30) einen Grundkörper (21, 31) und mindestens ein Verschlusselement (23) aufweist.

7. Mobile Arbeitsmaschine nach einem der Ansprüche 1 bis 6, **dadurch gekennzeichnet, dass** das Verschlusselement (23) mindestens eine Armatur und/oder mindestens eine Anschlussvorrichtung (26) für mindestens eine Armatur und/oder eine Rohrleitung umfasst.

8. Mobile Arbeitsmaschine nach einem der Ansprüche 1 bis 7, **dadurch gekennzeichnet, dass** der Grundkörper (21, 31) des druckbeaufschlagten Tanks (20, 30) mindestens eine Anschlussvorrichtung für mindestens eine Armatur und/oder mindestens eine Rohrleitung umfasst.

9. Mobile Arbeitsmaschine nach einem der Ansprüche 1 bis 8, **dadurch gekennzeichnet, dass** der druckbeaufschlagte Tank (30) mindestens zwei getrennt angeordnete Druckräume (32) aufweist.

10. Mobile Arbeitsmaschine nach einem der Ansprüche 1 bis 9, **dadurch gekennzeichnet, dass** der druckbeaufschlagte Tank (20) Vorrichtungen (28) zur Befestigung des druckbeaufschlagten Tanks (20) insbesondere am Fahrzeug und/oder an weiteren Tanks aufweist.

11. Mobile Arbeitsmaschine nach einem der Ansprüche 1 bis 10, **dadurch gekennzeichnet, dass** der druckbeaufschlagte Tank (20, 30) zur Bevorratung von Wasserstoff vorgesehen ist

12. Druckbeaufschlagter Tank (20, 30) für eine mobile Arbeitsmaschine, insbesondere Flurförderzeug (1), nach einem der vorstehenden Ansprüche.
